# EUROPEAN PATENT APPLICATION

(11) **EP 1 010 490 A1**
(43) Date of publication of application: **21.06.2000**
(21) Application number: 99124361.9
(22) Date of filing: 07.12.1999
(51) Int. Cl.: B23K 9/10

(54) **Method and equipment designed to allow voice control of the functions of a welder**

(30) Priority: 11.12.1998 IT PC980039
(71) Applicant: Esseti S.r.l., 36030 Costabissara VI (IT)
(72) Inventor: Terzo, Maurizio, 36100 Vicenza (IT)
(74) Representative: La Ciura, Salvatore

(57) **Abstract**

This invention relates to a method and the associated equipment designed to allow voice control of the functions of a welder, and more particularly a method and equipment which allow regulation of a welding generator (5) by means of voice commands issued by the operator, with no need to stop work, merely by issuing an easily memorable voice command through devices which also allow these commands to be customised.

In practice, the method in accordance with the invention involves:
- a voice command spoken by the operator;
- acquisition of the voice signal by a transducer (1);
- digitising (8), processing (9) and recognition (3) by software of the command issued;
- generation of a corresponding equipment control signal.

In accordance with an advantageous aspect of the invention, the voice recognition and code generating devices will be connected via radio with an interface on the generator which receives the signal corresponding to the spoken command and activates the function requested through a servo control.

## Description

This invention relates to a method and the associated equipment designed to allow voice control of the functions of a welder, and more particularly a method and equipment which allow regulation of a welding generator by means of voice commands issued by the operator.

The purpose is to allow the welder functions and parameters to be set with no need to stop work, merely by issuing an easily memorable voice command through devices which also allow these commands to be customised.

In practice, the method in accordance with the invention involves:
- a voice command spoken by the operator
- acquisition of the voice signal by a transducer
- digitising, processing and recognition by software of the command issued
- generation of a corresponding equipment control signal.

In accordance with an advantageous aspect of the invention, the voice recognition and code generating devices will be connected via radio with an interface on the generator which receives the signal corresponding to the spoken command and activates the function requested through a servo control.

In current welding equipment, the generator is usually regulated by a direct manual operation performed by the operator.

For this purpose the operator usually operates switches, potentiometers, regulation pedals or pushbutton panels on the generator, which means having to stop work and go to the generator (which is often, as in the case of shipyards, for example, located several dozen metres from the place of welding) to set the functions required.

More recently, welders have been introduced onto the market which allow welding commands to be set by means of buttons or the like located on the tool, which may be the welding torch or gun.

In this case the operator must issue a series of control pulses, for example from a pushbutton panel, in accordance with a combination corresponding to the functions to be set.

Remote-control systems are also known; in particular, this applicant's application no. Vl 97A 000147 relates to a welder in which the various functions can be set by means of a radio control also located near the tool.

However, although these more recent systems are very convenient and practical to use, the operator is still forced to stop work until the necessary regulations have been made.

In practice, the part common to all these known regulation systems involves coding by the operator of the action to be performed by the generator, in an operation which requires the ability to interpret the command and good manual dexterity in order to perform it correctly.

Thus even the simplest regulation system does not guarantee standard welding quality, because it depends on various human factors, including:
- interpretation and correct setting of the command by the operator
- the operator's manual dexterity
- interruption of the operating cycle
- corrective action limited to a maximum of two variables in the welding cycle.

It should also be borne in mind that the operations performed to set the welding parameters differ from one type of machine to another, which makes it even more difficult to achieve the required standardisation.

To solve this problem, the present invention offers a method and the corresponding equipment involving the issue of a voice command by the operator, the conversion of this voice command into a digitised signal, comparison with a table of corresponding pre-stored signals and generation of a signal, depending on the command issued, which is sent to a generator servo control.

In this way, the operator can not only set the welding functions merely by speaking the necessary command without stopping work; in addition, the procedure can be standardised for all types of machine merely by associating the various combinations of commands to be issued to the generator with the same series of voice commands as will be spoken by the operator.

The operator can consequently change from one machine to another without difficulty, as the same commands will always be used to perform the necessary regulations.

This invention will now be described in detail, by way of example but not of limitation, by reference to the annexed figures in which:
- figure 1 is a diagram illustrating the main control components in a unit in accordance with the invention
- figure 2 is a block diagram showing the electronic controls in a unit in accordance with the invention
- figure 3 schematically illustrates a welders helmet in which a control unit in accordance with the invention is incorporated.

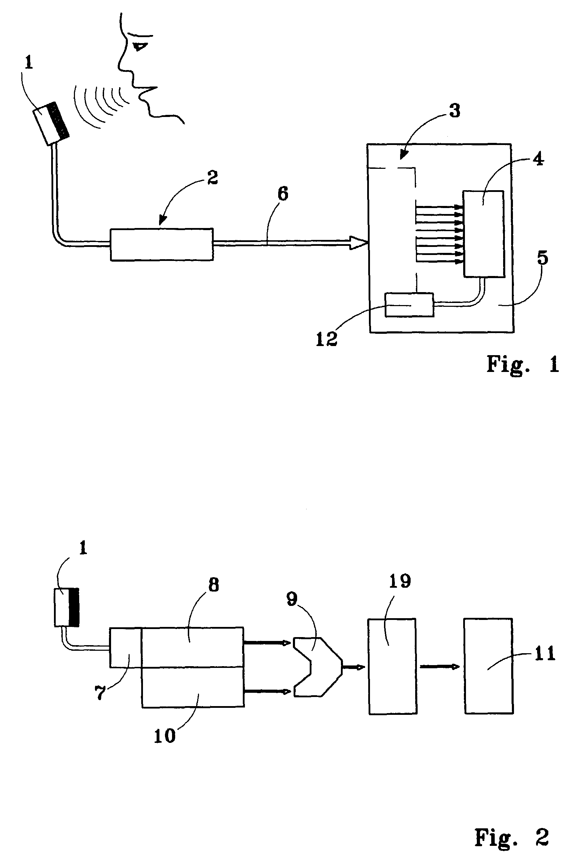

With reference to figure 1, a control unit in accordance with the invention comprises firstly a command acquisition and coding system constituted by a microphone 1 connected to a processing and interface card 2, and secondly an interface 3 connected to the servo control 4 of a generator 5. The method requires the operator to issue a voice command which is detected by microphone 1 and sent to card 2.

Here the command is recognised and a code is generated and sent to interface 3 via a transmission line 6, which may be constituted by a cable, a radio wave transmission system or other known system. Depending on the code received, the said interface 3 generates a signal and sends it to servo control 4, which sets the parameters relating to the welding function required on generator 5.

The structure of card 2 is more particularly illustrated in figure 2.

Microphone 1 is connected to the input of a signal conditioner, constituted by an analog filter 7, from which the signal is transmitted to a digitising unit 8 where it is converted into a digital signal suitable for processing by a microprocessor 9.

The microprocessor is also connected to a memory 10 in which a number of words corresponding to the various commands that the operator can issue are stored.

Microprocessor 9 (logic-arithmetic unit) also includes a read-only memory with a voice recognition program.

Processor 9 is connected to a code transmission unit 19 which in turn may be connected to a transmission module 11, such as a radio transmission module or the like.

As mentioned, on one side of the generator there is an interface 3 which receives the signal from interface 11 and is connected to servo control 4.

A pushbutton panel 12, via which commands can be input manually or operating parameters can be set, is also connected to the servo control.

The pushbutton panel not only serves to control the generator directly, but also to input sequences of commands to be stored in order to customise the functions of the machine.

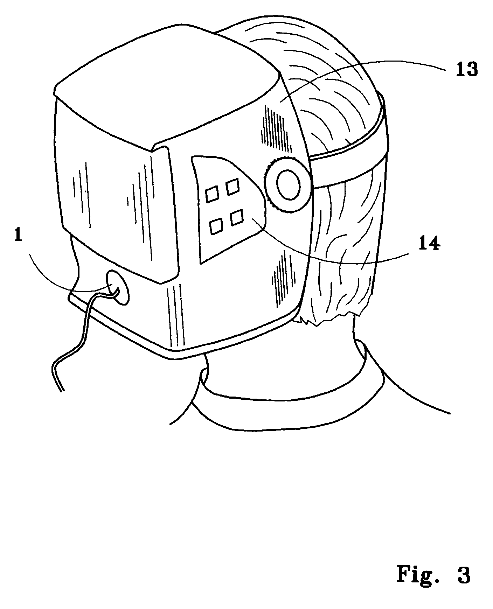

The voice recognition, signal generation and transmission assembly could advantageously be miniaturised and located, for example, on the welding torch or in the welder's helmet, as shown in figure 3, where the welder's helmet is indicated as 13, and no. 14 schematically indicates the circuit with the components for processing of the signal received from microphone 1 and transmission of the code generated.

During use, in order to set the generator functions, the operator merely needs to speak the corresponding command.

For example, the operator could say "more" to command an increase in welding current, "less" to reduce it, and so on.

All words can be stored in the operator's natural language.

Microphone 1 detects the command and transmits an analog signal to filter 7, from which the signal is conveyed to synthesiser 8.

Here it is converted to a digital signal, processed by microprocessor or logic-arithmetic unit 9, which compares that signal with the keywords previously stored in memory 10 and, as a result of that comparison, generates a code that is sent to unit 10 and from there to transmission module 11. The code is then transmitted via cable or radio to interface 3 on the generator; depending on the code received, the said interface then generates a signal that activates servo control 4 to set the required function on the generator.

The operator can also store a set of customised commands.

For this purpose, it is sufficient to enter a storage function from pushbutton panel 12 (in accordance with a technology known in the computer sector), then manually input the sequence of commands and regulations required, speak the voice command and store this voice command, which will remain associated with the sequence of commands input from the pushbutton panel.

During welding, the operator merely needs to speak the stored command, and the machine will adopt the settings previously input manually. In this way, the operator can directly control all variables that influence the current welding operation in real time, with no need for mediation via interface instruments.

Apart from its ease of use, the system also increases the number of commands which can be issued by the operator; the only limit is imposed by the size of memory 10.

The system could be applied to all types of welding equipment, including electrode welding and TIG, MIG, MAG, pulsating-arc and plasma-arc welding.

## Claims

1. Method for voice control of the functions of a welder, characterised in that it comprises:
• spoken issue by an operator of a command corresponding to the welding functions to be set
• acquisition of the voice signal by a transducer
• digitising, processing and recognition by software of the command acquired
• comparison with a previously stored set of commands
• generation of a corresponding signal for control of the generator (5) via a servo control (4).

2. Method as claimed in claim 1, characterised in that the voice command is acquired by means of a transducer (1) located on the torch.

3. Method as claimed in claim 1, characterised in that the voice command is acquired by means of a transducer (1) located in the welder's helmet (13).

4. Method as claimed in the preceding claims, characterised in that it comprises a stage of analog filtration of the signal prior to digitising.

5. Method as claimed in claim 1, characterised in that it includes a command storage stage in which:
• a voice command is spoken;
• a digitised signal corresponding to the said command is acquired and stored;
• the parameters and commands corresponding to the function to be performed are set by means of input devices;
• the said stored command is associated with the said stored set of functions and parameters so that when the voice command is repeated, the machine performs the said functions.

6. Welder characterised in that it comprises means of voice control of welding functions.

7. Welder as claimed in claim 6, characterised in that it comprises:
• a transducer (1) designed to acquire a voice command issued by the operator;
• digitising means (8) designed to process the said command and generate a signal on the basis of the command issued;
• means (4) designed to set the functions corresponding to the said command on the generator.

8. Welder as claimed in claim 7, characterised in that it comprises:
• a transducer (1) designed to acquire a voice command imparted by the operator;
• digitising means (8) designed to process the said signal;
• processing means (9) designed to compare the said digitised signal with a set of signals previously stored in a table (10) and generate a code based on the said comparison;
• interface means (2) designed to send the code thus generated to a servo control (4) located on the generator.

9. Welder as claimed in claims 6 to 8, characterised in that the said transducer (1) is incorporated in the welding torch.

10. Welder as claimed in claims 6 to 8, characterised in that the said transducer (1) is incorporated in the welder's helmet (13).

11. Welder as claimed in claims 6 to 10, characterised in that it comprises radio connection means (11) between the said code generation devices (9) and the said servo control (4) located on the generator (5).
